# EUROPEAN PATENT SPECIFICATION

(11) **EP 3 735 498 B1**
(45) Date of publication and mention of the grant of the patent: **03.12.2025**
(21) Application number: 19756650.8
(22) Date of filing: 19.02.2019
(51) Int. Cl.: E04B 1/38, E04B 1/61, F16B 25/10, F16B 35/04, F16B 35/06

(54) **COMBINED ANCHOR AND FASTENER ASSEMBLY**
KOMBINATION AUS ANKER UND BEFESTIGUNGSANORDNUNG
ENSEMBLE D'ANCRAGE ET DE FIXATION COMBINÉ

(30) Priority: 20.02.2018 US 201862632453 P; 06.04.2018 US 201862653694 P; 30.08.2018 US 201862724891 P; 13.12.2018 WO PCT/US2018/065465
(43) Date of publication of application: 11.11.2020
(60) Divisional application: 25200611.9
(73) Proprietor: LN1 INC., Southampton, NY 11968 (US)
(72) Inventor: Nill, Lance, Southampton, NY 11968 (US)
(74) Representative: Swindell & Pearson Limited
(86) International application number: PCT/US2019/018592
(87) International publication number: WO 2019/164843

(56) References cited:
- EP-A1- 0 926 362
- EP-A1- 3 034 893
- DE-A1- 102011 116 877
- DE-A1- 4 041 765
- JP-A- 2007 205 064
- US-A- 2 377 397
- US-A- 3 868 732
- US-A- 4 490 083
- US-A1- 2013 008 121
- US-A1- 2014 101 913
- US-B1- 6 361 258
- US-B1- 6 439 817

## Description

### RELATED APPLICATIONS

This application claims the benefit of U.S. Provisional Patent Application Serial No. 62/632,453, filed February 20, 2018, U.S. Provisional Patent Application Serial No. 62/653,694, filed April 6, 2018; U.S. Provisional Patent Application Serial No. 62/724,891, filed August 30, 2018, U.S., and is a Continuation-In-Part of U.S. Non-Provisional Patent Application Serial No. 15/852,733, filed December 22, 2017, and U.S. PCT Application No. PCT/US/2018/065465, filed December 13, 2018.

### FIELD OF THE INVENTION

The present invention relates generally to the field of fasteners and anchors, especially useful in the building industry for various tasks, such as, e.g., securing windows and doors to surrounding support framing in buildings, and the like. More particularly, the present invention relates to a combined anchor and fastener assembly wherein both functions of anchoring and fastening are achieved by the provision of a relatively simple, yet highly effective combined anchor and fastener assembly. The assembly comprises a baseplate or flange attached to a post depending therefrom in the form of a screw or bolt having a threaded blind bore formed therein for anchoring objects to a support structure which affords a strong and robust joint allowing easy, facile and quick installation and also affords watertight performance.

### BRIEF DESCRIPTION OF THE PRIOR ART

Various methods for mounting and waterproofing, a variety of items, such as solar panels and railings to roofs and terraces or windows, doors, or the like to, are well known but prove to be crude and insufficient over time. In the window and door industry, there are often issues with water infiltration at the points of attachment of the windows and doors to the building framing. While conventional pan flashing may be installed below the window or door in order to collect and direct any water that may leak through or around the window or door opening to the exterior, water infiltration may still occur at the points of attachment of the pan flashing to the building framing. Accordingly, it is difficult for many of the installers to provide guarantees or obtain insurance against water or moisture damage caused by conventional window or door anchoring systems.

In Applicant's U.S. application Serial No. 15/852,733, Applicant addressed this problem by the provision of a novel anchor and fastening assembly especially intended for mounting and waterproofing roof equipment, accessory structures or the like, such as solar panels, HVAC equipment and roof railings etc. on roofs, roof decks, balconies and the like, comprising an anchor baseplate and a post depending therefrom, the latter of which is receivable into or through the intended "anchoring" structure support and an at least partially threaded blind bore passes through the baseplate and into the post. A fastener, such as a bolt, is receivable in the blind bore for fastening an object to the assembly. As mentioned above, the assembly can be used to secure, e.g., a solar panel, HVAC or other roof equipment to a roof or other building structure. The present invention provides an improvement to this novel anchor and fastener assembly, especially intended for windows and doors by configuring the post as a one-piece screw or bolt anchor while still affording a strong and robust joint and watertight performance.

Accordingly, it is an object of the present invention to provide a novel anchoring system which addresses and solves such problems in the prior art systems as noted above in an advantageous, effective and facile manner.

It is a further object of the invention to provide a novel anchor assembly which is more reliable than prior art systems in providing a waterproof connection at the attachment points.

It is another object of the present invention to provide a novel one-piece anchor assembly which is relatively simple in design and construction, easy and quick to install, and is relatively inexpensive to make.

It is an object of the present invention to provide a novel anchor assembly especially useful in the building industry for a variety of support and connection tasks, such as, e.g., for anchoring windows and doors into openings formed in a building's framing or hanging shutters and the like and providing waterproof protection at the attachment points.

DE 40 41 765 A1 relates to a screw-in anchor with a shank with a cylindrical outer surface and an inner cavity which is suitable for receiving a fastening element, an external thread being provided on the outer surface of the screw-in anchor.

DE 10 2011 116877 A1 relates to an insulating dowel, preferably made of plastic, with a shank that is conical at least in sections, which has a tip and is provided with a self-tapping external thread.

US 2013/008121 A1 discloses a multi-piece anchor body for use with masonry over stud back-up walls, the anchor body made up of an inner anchor body for connection to a back-up wall, a separate outer anchor body for connection to a masonry wall, and a separate intermediate membrane flange attachable to and between the outer anchor body and the inner anchor body.

US 3 868 732 A discloses an anchoring device, such as an eye bolt, removably mounted to a wall of a vinyl lined swimming pool for anchoring swimming pool accessories thereto.

### SUMMARY OF THE INVENTION

Certain of the foregoing and related objects are readily attained according to the present invention by the provision of a combined anchor and fastener assembly for anchoring an object to a support structure, comprising an anchor baseplate having a top surface and a bottom surface, an elongated post having an upper end and lower end, with said upper end thereof coupled to said baseplate so it depends from said bottom surface thereof, and an at least partially threaded blind bore extending from said top surface of said baseplate into said post, and having an open top end in said top surface of said baseplate and a closed bottom end in said post, with said bottom surface of said anchor baseplate being configured to allow at least a portion of the support structure to abut and lie generally flush thereagainst except for the area of said bottom surface which is covered by post, wherein said post comprises an at least partially threaded screw or an at least partially threaded bolt, wherein said assembly additionally includes an elongated, cylindrical, tubular neck portion having a throughbore with an open top end and open bottom end, and wherein said bottom open end thereof is affixed to said top surface of said baseplate with its throughbore in axial alignment and registry with said blind bore of said baseplate.

In preferred embodiments of the present invention the anchor baseplate comprises a flange and desirably the flange is a generally circular, planar flange.

In a further preferred embodiment, a polygonally-shaped nut having a throughbore is affixed to the top surface of said baseplate with its throughbore in axial alignment and registry with said blind bore of said baseplate. The polygonally-shaped nut is a preferably hexagonally shaped nut.

In another preferred embodiment, the throughbore of said neck portion is at least partially threaded. Most desirably, the blind bore has a longitudinally-extended axis and the assembly additionally includes means for rotating said anchor about said axis of said blind bore. Most advantageously, said means for rotating comprises a port formed adjacent to and within said open top end of said elongated neck portion which is configured and dimensioned to accommodate a tool for rotating said anchor into a support structure.

In a particularly preferred embodiment of the present invention, the assembly additionally includes means for fastening an object to said anchor baseplate via said blind bore, preferably, a threaded bolt, and means for fastening said anchor baseplate to the support structure with said bottom surface thereof lying generally flush against at least a portion of the support structure except for the area of said bottom surface covered by said post, which advantageously comprises a nut.

### BRIEF DESCRIPTION OF THE DRAWINGS

Other objects and features of the present invention will become apparent from the detailed description considered in connection with the accompanying drawings, which disclose several embodiments of the invention. It is to be understood that the drawings are to be used for the purpose of illustration only and not as a definition of the limits of the invention.
FIG. 1 is a side elevational view of a combined flush screw anchor and fastener assembly according to a first non-claimed embodiment;
FIG. 2 is a side elevational view, in part section, of the flush screw anchor assembly shown in FIG. 1;
FIG. 3 is a top plan view of the flush anchor flange assembly shown in FIGS. 1 and 2;
FIG. 4A is a side elevational view, in part section, similar to FIG. 2, but showing the optional provision of a flat head screwdriver port;
FIG. 4B is a top plan view similar to FIG. 3, but showing the optional provision of a flat head screwdriver port;
FIG. 5A is a side elevational view, in part section, similar to FIG. 2, but showing the optional provision of an Allen key port;
FIG. 5B is a top plan view similar to FIG. 3, but showing the optional provision of an Allen key port;
FIG. 6 is a side elevational view of a combined hex head screw anchor and fastener assembly according to a second non-claimed embodiment;
FIG. 7 is a side elevational view, in part section, of the hex head screw anchor assembly shown in FIG. 6;
FIG. 8 is a top plan view, in part section, of the hex head screw anchor assembly shown in FIG. 6;
FIG. 9 is a side elevational view of a combined long neck screw anchor and fastener assembly according to a third claimed embodiment;
FIG. 10 is a side elevational view, in part section, of the long neck screw anchor assembly shown in FIG. 9;
FIG. 11 is a perspective view of the long neck screw anchor assembly shown in FIG. 9;
FIGS. 12-14 are side elevational views, in part section, of bolt anchor assemblies corresponding to the first, second and third embodiments, respectively, utilizing a bolt with a central blindbore rather than a screw;
FIG. 15 is a side sectional view, in part elevation, of the flush and hex head screw anchor assemblies utilized to secure a window to a building's window framework;
FIGS. 16A and 16B are side sectional views, in part elevation, showing the long neck screw anchor assembly utilized to secure a shutter to an outer wall of a house, in an exploded view and fully installed view, respectively; and
FIGS. 17A and 17B are side sectional views, in part elevation, showing the long neck bolt anchor assembly utilized to secure a shutter to an outer wall of a house, in an exploded view and fully installed view, respectively.

### DETAILED DESCRIPTION OF PREFERRED AND ILLUSTRATED EMBODIMENTS

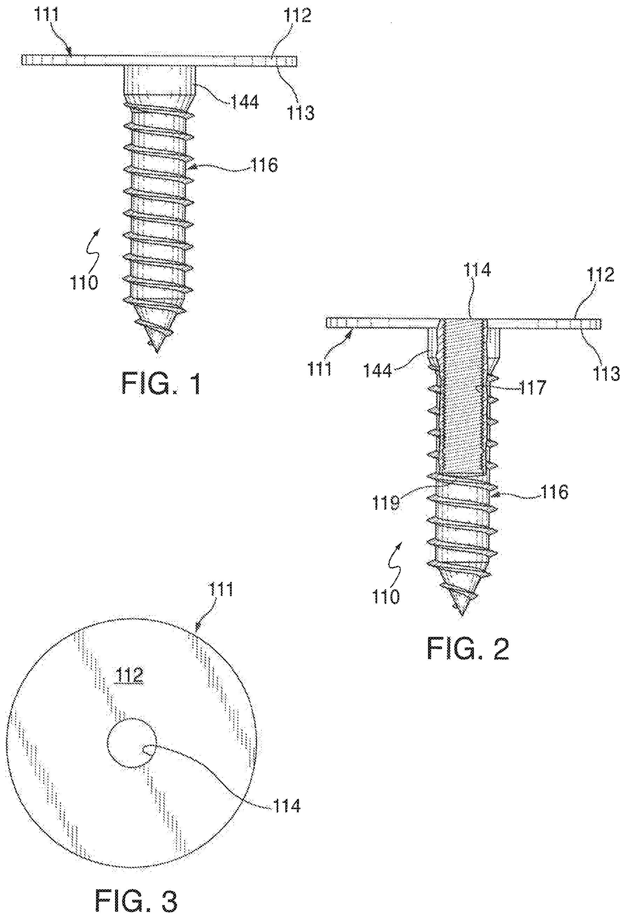

Turning now in detail to the drawings and, in particular, FIGS. 1-3 illustrate a first embodiment of the novel anchor and fastener assemblies (hereinafter generally referred to as "anchors" or "anchor assemblies"), generally designated by reference numeral 110. Anchor assembly 110 is a flush screw anchor and is particularly useful in the building trade for a myriad of uses and is especially suitable for securing windows or doors to surrounding support framing therefor within a building. Flush screw anchor assembly 110 comprises a preferably planar baseplate, flange or washer 111 having an upper surface 112, an opposite lower surface 113, and an optionally-internally-threaded central opening 114 extending therethrough. Additionally, screw anchor assembly 110 also includes an externally-threaded post, preferably in the form of a screw or a lag screw 116 secured to anchor baseplate 111 and extending downwardly from lower surface 113 of baseplate 111. As shown best in FIG. 2, the upper shaft of screw 116 includes an axially-extending, internally-threaded central bore 117 which merges with and is axially aligned with central opening 114 of baseplate 111. Bore 117 has a diameter smaller than the external diameter of the externally-threaded upper shaft of screw 116.

Bore 117 in screw 116 is a blind bore having an open top end defined by the bore 114 in flange or baseplate 111 and a closed bottom end 119 in the shaft of screw 116. It is also preferred that screw 116 and baseplate 111 are integrally joined to form a one-piece combined anchor and fastener assembly or component. Screw 116 can be secured to baseplate 111 via welding, a press-fit connection or by any other fastening means that would insure that screw 116 and baseplate 111 are securely and rigidly fastened together to provide a strong and robust anchor.

As will be shown and discussed hereinafter in relationship to the installation and use of the anchors, of the present invention for this embodiment and the other embodiments described herein, a fastener typically in the form of a bolt 26 having an enlarged head and a threaded shaft together with a washer 27 is threadably receivable in the bore 117 to hold and securely fasten an object to the anchor so that the object, or part thereof or an associated accessory structure therefor, such as the U-shaped bracket used to support a glass panel for a roof railing shown in Applicant's parent application, Serial No. 15/852,733, is securely held fast against the upper surface of anchor baseplate 111. This is accomplished by providing a through-hole in the object, part or accessory structure therefor through which the threaded shaft of the bolt is passed through before it is threaded into the bore 117 or the like of the anchor and tightened to securely fasten the object to the anchor.

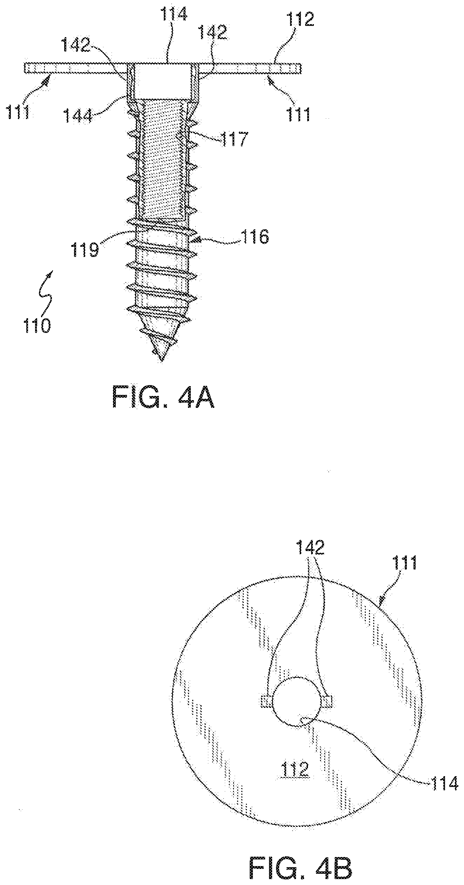

FIGS. 4A and 4B illustrate a modification of the flush anchor embodiment shown in FIGS. 1-3, wherein a recessed, flat head screw slot or port 142 is formed in baseplate 111 on opposite sides of its central bore 114 which extends therebelow into the upper, externally smooth and enlarged head portion 144 of lag screw flush anchor 110 on opposite sides of its central bore 117 to allow a flat head screwdriver or other tool (not shown) to be inserted into said slot 142 to facilitate turning of the externally-threaded shaft of screw 116 to either screw the anchor 110 into the intended supporting structure or to threadably remove it therefrom, if e.g., it needs to be repositioned in the building supporting structure.

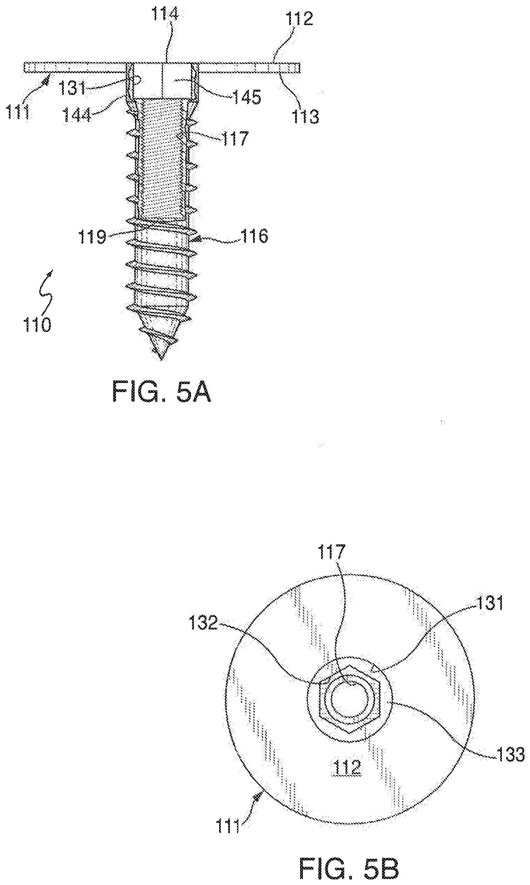

FIGS. 5A and 5B illustrate another modification of the embodiment shown in FIGS. 1-3, wherein instead of the employment of a flat head screwdriver port 142, an Allen key port 133 is provided. More particularly, a countersunk cylindrical head space 145 is provided in the anchor baseplate 111 and it extends therebelow into the upper, externally smooth enlarged head portion 144 of lag screw anchor 110, defined in part, by cylindrical wall 131 extending downwardly from the top surface 112 of washer 111 into the countersunk head space 145 provided in and jointly defined by baseplate 111 and head portion 144.

The Allen key port 133 comprises a cylindrical metallic plug secured in head space 145, preferably via welding bore 117. The cylindrical plug 133 has inner wall 132 defining a preferably hexagonal central bore which serves as an Allen key port and is configured to receive an Allen key (not shown) by which the flush screw anchor 110 can be easily and threadably screwed into, and removed from, the door frame, window frame or other support, as described and illustrated in greater detail hereinafter.

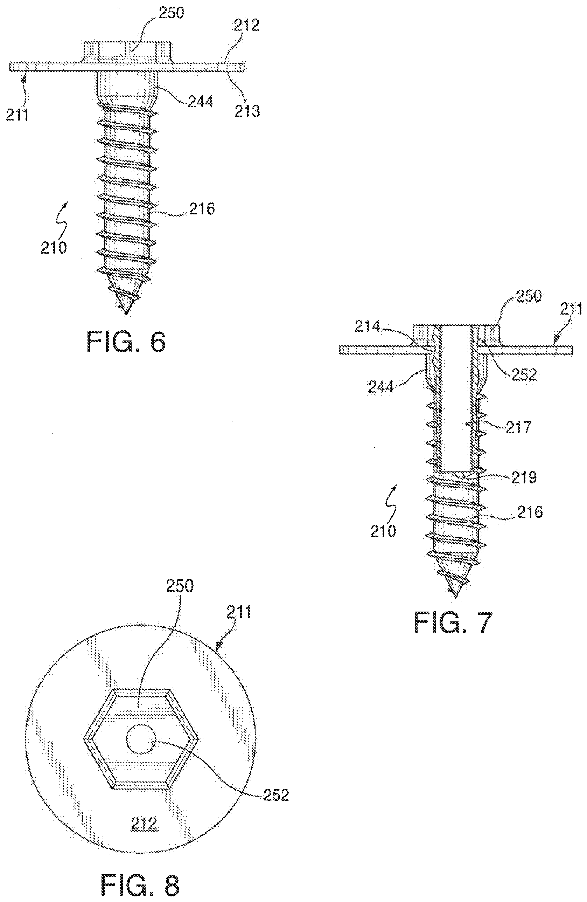

In a second embodiment, as shown in FIGS. 6-8, a hex head lag screw anchor 210 is provided having a hexagonal hex nut 250 secured atop upper surface 212 of baseplate 211. The hexagonal hex nut 250 serves the same purpose as the screwdriver slot, Allen key port, or the like, whereby a tool such as a socket wrench (not shown) can be used which is configured to grip the hex head to facilitate its threaded engagement into, or removed from, the door or window building frame. External hex nut 250 is preferably integrally joined to baseplate 211, such as by welding, to form a one-piece component. As shown best in FIG. 7, external hex nut 250 contains an internally-threaded, central through bore 252 which is in axial alignment and registry with central bore 217 of lag screw 216 and bore 214 of baseplate 211. While anchor 210 is illustrated and described as having a hexagonal shaped nut 250, other polygonal or geometric shapes are possible and contemplated by the present invention and as further disclosed below.

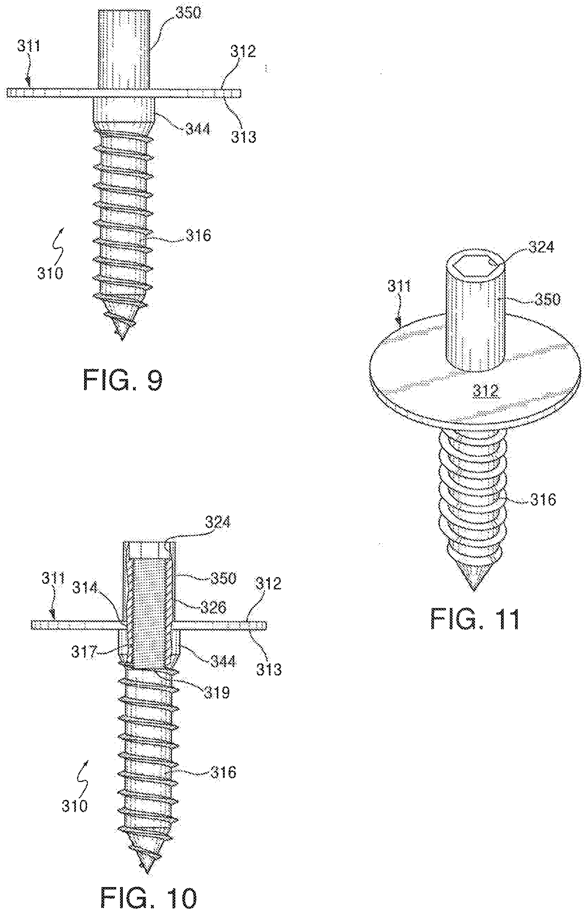

Turning now to FIGS. 9 -11, therein illustrated is a third embodiment of a novel, extended, elongated or "long neck" lag screw anchor assembly according to the present invention, generally designated by reference numeral 310. The anchor 310 includes a preferably radially-extending, disk-like, annular baseplate, flange or washer 311 having an upper planar surface 312 and an opposite lower planar surface 313, the latter of which is also preferably welded to the top end of lag screw 316. The so-called "extended" or "long neck" 350 comprises an elongated, hollow tube or collar which is attached at its bottom end, preferably via welding, to the upper surface 312 of flange 311.

The neck 350 is cylindrical. As shown best in FIG. 11, long neck 350 has a central bore defined by an inner surface 324 adjacent its open top end which is preferably hexagonal to define an Allen key port, and the lower end of inner surface 324 merges with threaded internal throughbore 326 disposed therebelow. As in the other embodiments, an Allen key tool (not shown) can be inserted into the Allen key port to facilitate and effect its threaded engagement into and from a support structure.

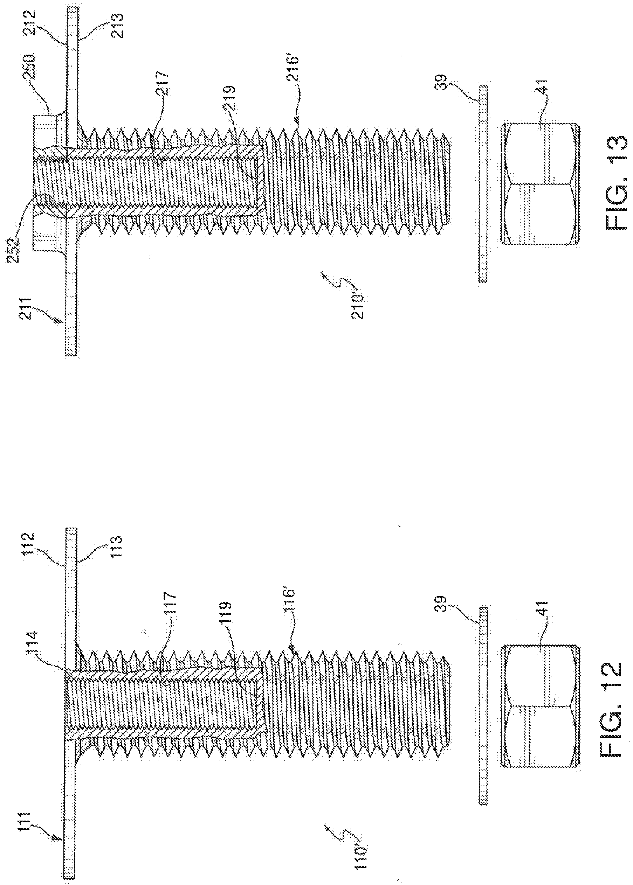

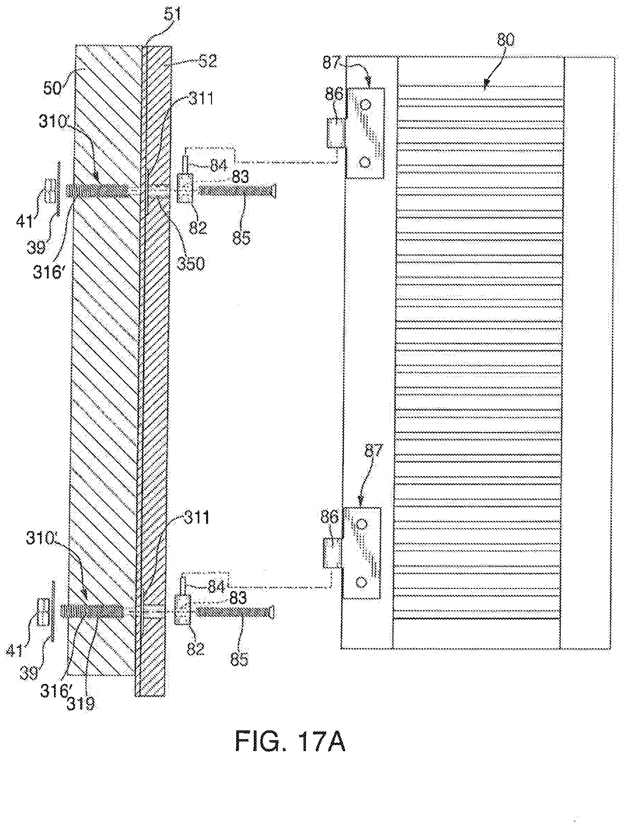

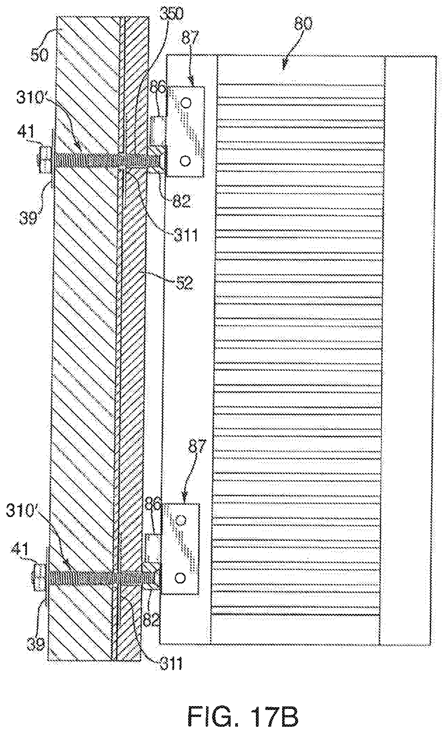

FIG. 12 illustrates a flush bolt anchor assembly 110' wherein the threaded flush anchor screw 116 shown in FIGS. 1 - 5B is replaced by threaded bolt 116'. The threaded bolt 116' would be screwed into and through a support structure until baseplate 111 would abut and lie flush on the top surface of the support structure and its lower end would pass through a throughbore in the support structure to allow a washer 39 and nut 41 to be placed and threaded on bolt 116', and fully tightened to sandwich and securely anchor the support structure between baseplate 111 and washer 39, as illustrated and discussed herein further below in relation to FIGS. 17A and 17B

FIG. 13 illustrates a hex head bolt anchor assembly 210' wherein the threaded screw 216 shown in FIGS. 7 and 8 is replaced by threaded bolt 216'. Here too, the threaded bolt 216' would be screwed into and through a support structure until its baseplate 211 would abut and lie flush on the top surface of the support structure and the threaded bolt 216' would pass through the support structure to allow a washer 39 and nut 41 to be placed and threaded thereon, respectively to sandwich the support structure between its baseplate 211 and washer 39, as also further discussed and illustrated herein.

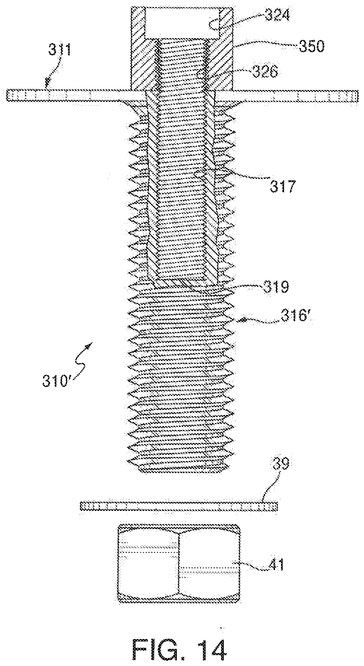

FIG. 14 illustrates a long neck bolt anchor assembly 310' wherein the threaded screw 316 is replaced by threaded bolt 316'. Once again the threaded bolt 316' would be screwed into and/or inserted through a support structure until its baseplate 311 would abut and lie flush on the top surface (or one side) of the support structure. At the same time, the lower end of bolt 316' would pass through the bottom (or other side) of the support structure to allow a washer 39 and nut 41 to be placed and threaded thereon to securely anchor the anchor assembly 310' to the support structure, which, in turn, would be sandwiched between base plate 311 and the washer 39 and nut 41 as illustrated and further described herein in relation to FIGS. 17A and 17B.

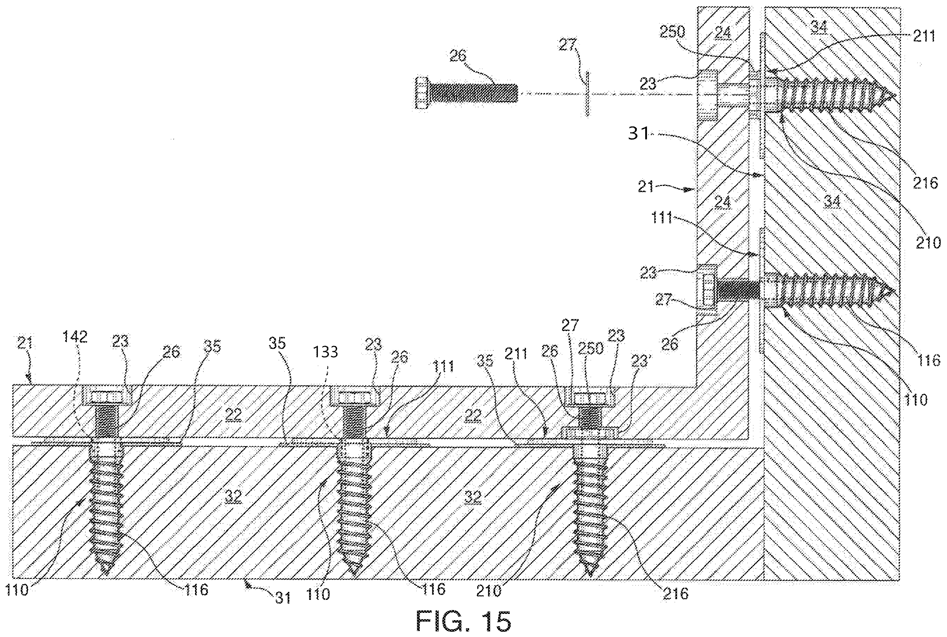

Turning now to FIG. 15, therein illustrated is a window or door frame 21 attached to a building support frame 31 by the flush screw anchor assembly 110, and/or hex head anchor assembly 210. More particularly, the three anchor assemblies mounted on the horizontal bottom sill or support 32 of building frame 31, viewed from left to right, comprises the flush screw anchor assembly 110 with the flat head screwdriver port 142, the flush screw anchor assembly 110 with the Allen key port 133 and the hex head screw anchor assembly 210. In the upstanding leg or jamb 34 of the window building frame 31, a hex head flush screw anchor 210 (shown in an exploded view) and a flush screw anchor 110 spaced therebelow (fully mounted) are shown. At the point of attachment for each respective anchor, the window frame 21 on its lower and upper sections 22, 24 are each provided with a recessed generally T-shaped throughbore 23 configured and dimensioned to define an enlarged upper well or shelf for receipt of the bolt head 26 and washer 27 on the top shelf and a lower elongated bore to accommodate the shaft of the bolt 26 and to allow its insertion into bores 114, 117, and 214, 217 of anchors 110 and 210 respectively, so the bottom sill 22 of the window frame 21 lies flush against the anchor baseplates 111, 211 with the bottom sill 22 sandwiched between and tightly secured between flanges 111, 211 and the washers 27 of bolts 26. The bottom surface of the sill 22 of the window frame 21 is provided with a further recessed well 23' for receipt therein of the hex head 250 of the hex head anchor 210 to ensure flush engagement of the bottom surface of sill 22 with the top surface of building sill frame 32.

Two similarly configured T-shaped bores 23 are provided on the inner surface of the jamb side rails 24 of the window frame 21 for effecting receipt of the head of bolt 26 and washer 27 in the upper enlarged well thereof and with the shaft of bolt 26 received through the lower bore portion into the blind bore 217 of the hex head screw anchor 210 (shown in exploded view) and the flush screw anchor therebelow (shown fully installed). As a result of the use of a hex head screw anchor 210, the jamb 24 of the window frame 21 is spaced from the building frame jamb 34 to optionally allow the provision of shims (not shown) in this intermediate space between jambs 24, 34 to level the window (or door) as may be needed during installation.

Anchor assemblies 110 and 210 are utilized to mount and secure a window or door 21 frame to a building frame 22, which may be wood, metal, concrete, composite construction material, or the like, as is standard or conventional in the industry. The shafts 116 and 216 of the screw anchors 110 and 210, respectively are configured and dimensioned to be screwed into the building's window or door framing 21 at desired locations, such as on the bottom sill 32 and side jamb 34 of the building framing, until lower side 113 of baseplate 111 is in flush abutting contact with the bottom plate 32 and jack stud 34 of the building frame 31 defining the window or door opening frame.

In other situations, it may be desirable to also utilize conventional window and door sill waterproof pan flashing (not shown). In installations where sill pan flashing is utilized, the flashing overlies the window or door sill 32 supporting the window frame 21. Anchors 110, 210 are screwed through the pan and into building frame 31, so that lower surface 113, 213 of baseplate 111, 211 overlies the pan. When a metal pan is utilized, it may be preferable to weld or solder the lower surface 113 of baseplate 111, 211 to the pan.

Alternatively, as shown in FIG 15, a sealant, cement, caulk or adhesive layer or a gasket 35 may optionally be applied to the lower surface 113, 213 of the baseplate 111, 211 to adhesively join and seal the baseplate 111 to the bottom plate 31 or pan. In this situation, it is preferable to place the sealant or gasket 35 beneath baseplate 111, 211 prior to fully tightening anchors 110, 210 in place. The anchors 110, 210, are then tightened down with the baseplate 111 overlying the sealant gasket 35 to seal it in place. When a rubber gasket 35 having a central opening, or the like, is utilized, it is received around the shaft of post or screw 116, 216 prior to screwing anchors 110, 210 into sill 32 or pan.

Once the anchor assemblies 110, 210 are fastened into their desired locations on the building framing 31 for the door or window, with gasket or sealant 35, bolts 26 are inserted into bores 114, 117 of anchors 110 and 210. The installer has the option of loose laying the window or door frame 21 within the building or wall frame 31 on top of bolts 26 that are temporarily received in bores 117, 217 of anchors 110, 210. The bolts 26 are turned, such as with a crescent wrench, to their desired leveling height. Shims (not shown) are then inserted between the pan or baseplate 111, 211 and window frame 21, to level the door or window. The window or door is then removed from the building framing 31 and bolts 26 are unscrewed from anchors 110, 210. The window or door is then returned into the framing opening 21 on top of the shims (not shown). Bolts 26 are then inserted through the recessed openings 23 formed in the window or door frame 21 and into the internally-threaded central bores 117, 217 of shaft 116, 216 and tightened, to secure the window or door frame 21 in place. Depending on the size of the window frame 21, multiple anchor assemblies may be utilized and their exact size and placement will depend on the application.

As can be appreciated from FIG. 15, anchors 110, 210 serve to waterproof the assembly and protect the support structure from leaks. As previously mentioned, this is particularly important at the point of attachment of the window or door frames 21 to the supporting building frame structure 31. Since each of bores 114, 214 is a blind bore or hole and the bottom end 119, 219 of the shaft of screw or bolt 116, 216 is closed, the potential path of any water that could conceivably penetrate between the window frames 21 is blocked from penetrating building frame 31. Thus, blind bores 117, 217 serves two purposes: (1) they provide a strong, sturdy and rigid anchoring support point defined by the window or door to be mounted to the framing or other support structure, and (2) they prevent water from penetrating via the central bore 117, 217 into and below the framing 31 or other support structure as a result of blind bores 117, 217 and the bottom end 119, 219 being closed.

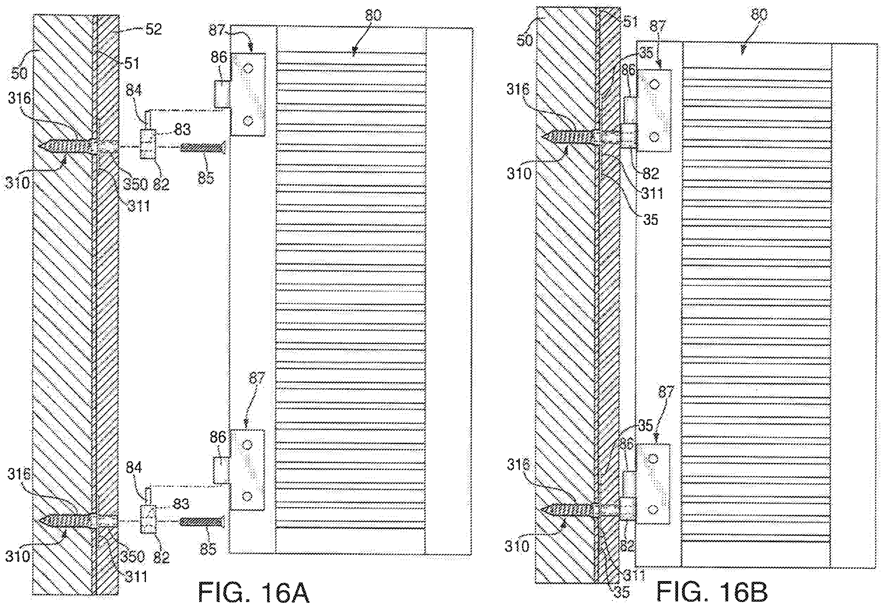

As shown in FIGS. 16A and 16B, long neck anchor assembly 310 is particularly suitable for anchoring and securing, e.g., shutters, hose bibs, wall-mounted hose cradles, outside plaques, or other items to outer building walls and the like composed of, e.g., a wall sheathing 50, a wall membrane sheet 51 and a layer of stucco 52 as it is typical for a stucco exterior finish on a house or building.

Please note that the sheathing may be wood, metal, concrete, composite construction material, or the like, as is standard or conventional in the industry. Consequently, shaft 316 of anchor 310 is configured and dimensioned to be screwed into the building's wall sheathing or building frame 50 and optional wall membrane 51 so that the open end of the extended long neck 350 lies generally flush with the outer surface of the stucco layer 52. As shown in FIG. 16A, during installation, anchor 310 is threadably fastened into its desired location preferably by use of an Allen key inserted in Allen key port 324 so that its long neck projects outwardly past membrane 51 to the intended stucco outer layer 52 (applied later). Alternatively, the outer sheathing or shingles can then be installed, with a cutout, if needed (not shown) to allow the anchor long neck extension 350 to extend through the outer sheathing 52 with its outer end 324 lying flush with the outer surface of the outer sheathing 52. Consequently, the tubular neck 350 has a length equal to the width or thickness of the building's wall outer sheathing, such as stucco 52, to realize both a flush and strong watertight attachment point for an object to be fastened thereto adjacent the outer face of the siding, which in this case is a shutter 80.

As shown in FIG. 16A (exploded view) and FIG. 16B (fully installed view), the two long neck anchor assemblies 310 may be used, e.g., in mounting a shutter 80 and, as shown, a hinge part 82 is provided having an upstanding hinge pin 84 upon which the shutter 80 will be pivotably mounted on a pair of its hinges. The hinge part 82 has a throughbore 83 in its cylindrical base portion and upstanding hinge pin 84 on which the hollow collar 86 of the shutter hinge plate 87 may be pivotably mounted to permit it to pivot from an open to a closed position relative to a window (not shown) it is intended to shutter. The anchor screw 316 of the long neck anchor assembly 310 is configured and dimensioned to be screwed, and fastened to the underlying building structure 50 at the desired location for mounting the shutters 80. A sealant 35 or gasket may be used on the underside of its baseplate 311.

More particularly, a sealant, cement, caulk or adhesive layer 35 may be applied to the lower surface 313 of the baseplate 311 to adhesively join and seal the baseplate 311 to the outer surface 52 of the wall sheathing or sub-structure 52 optionally covered by membrane 51, into which the shaft 316 is threadably received. In this situation, it is preferable to place the sealant layer 35 (or gasket not shown) beneath baseplate 311 prior to fully sealing anchor 310 in place. The anchor 310 is then tightened down with the baseplate 311 over the sealant (or gasket) 35 to seal it in place. When a rubber gasket having a central opening or the like, is utilized, the gasket 35 would be received around shaft 316 prior to screwing anchor 310 into the sub-structure. The gasket opening then would be received over shaft 316 with the gasket interposed between lower side 313 of baseplate 311 and the siding 50 or membrane 51.

Once the screw anchor 310 is secured to the frame structure 50, a bolt 85 is inserted through the internal bore 83 of hinge part 82 and is screwed into the threaded bore 326 of the long neck 350 and, in turn, into the internal threaded bore 317 of screw anchor 310. The hinge part 82 essentially becomes part of the long neck 350. After installation, the window shutter 80 via the central bore of hollow collar 86 of its hinge plate 87 is rotatably mounted on the upstanding pin 84 of hinge part 82 and is pivotably positioned onto the mounted hinge part 82. As can be seen, the shutter 80 is actually supported by two hinge plates 87 and collars 86 and two long neck screw anchors 310 each having a hinge part 82 and pin 84.

FIGS. 17A and 17B are similar to FIGS. 16A and 16B except that instead of the long neck screw anchor 310, a long neck bolt anchor 310' is used of the type shown in FIG. 14. This embodiment is suitable for situations where there is access to the interior side of the wall sheathing 50 or sub-structure so that a washer 39 and nut 41 can be mounted on the threaded shaft of bolt 316' and tightened to rigidly secure mounted bolt anchor 310' to the wall sheathing 50 which is sandwiched tightly between washer 39 and baseplate 311 whereby its long neck 350 free end is flush with the outer surface of the stucco layer. The installation of the hinge part 82, is the same as described in connection with FIGS. 16A and 16B.

As can also be appreciated from the foregoing, materials of anchors, their specific dimensions, shape threading configuration and size, etc., depend on the application and the surrounding building material, such as metal, wood, concrete or some other composite. For most applications, the baseplate is preferably circular-shaped, although other regular or irregular shapes or non-planar configurations could be used for certain applications. Similarly, it is anticipated that the types of fasteners, screws or bolts, will also be chosen to be compatible with the supporting surfaces. Also, the elements of the various embodiments may be substituted for one another where appropriate. Furthermore, while the various parts of the anchor assemblies are preferably made of stainless steel, they could be made of other materials or metals, such as, for example, aluminum, bronze, or metal, carbon fiber or ceramic alloys, and plastic.

In use, the blind bore, of course, has a diameter that is less than the external diameter of the screw or bolt. For example, for a practical application the screw or bolt screw may have an external diameter of 1/2" (1,27 cm) and the bore a diameter of 3/8" (0,95 cm). However, as mentioned above, the dimensions of the diameter of the screw or bolt can vary, as well as the length of the bore, the long neck and the screw or bolt. For example, preferably, the shaft of lag screw has an external dimension which is 3/8" or larger. However, both the dimensions of screw and the thread configuration thereof can vary depending upon the application, such as, e.g., the nature of the material, and purpose of the anchor and what it is used for, e.g., windows and doors, for which it will serve as an anchor and fastener.

Similarly, the length of the long or extended neck may be in any useful range and typically may be between approximately 0.10 inch (2.54 mm) and 2.5 inches (6,35 cm), but preferably 1.0 inch (2,54 cm). As mentioned above, the height or length of long neck is dimensioned to generally conform to the width of the sheathing or other structure from which it extends so as to provide a flush mount, or it may advantageously have a length that is shorter or longer than the width of the sheathing or other structure for other applications, if so desired.

It should be noted that, aside from the Allen key and screwdriver slot other means or other configured tool ports could instead be used to assist the user in screwing in and/or removing the anchor 110 to, or from, a building support. For example, the plug 133 or baseplate 111 could be configured to receive other known tools used for fastening and/or unfastening, such as Torx drive, Phillips head, or star bit tools which may utilize other shapes, e.g., pan head, round, oval, etc. for the tool port.

Accordingly, while particular embodiments of the invention have been described, it is not intended that the invention be limited thereto, as it is intended that the invention be as broad in scope as the prior art will allow and that the specification be read likewise. It will therefore be appreciated by those skilled in the art that other modifications could be made thereto without departing from the scope of the claims.

## Claims

1. A combined anchor and fastener assembly (310, 310') for anchoring an object to a support structure (50), comprising:
an anchor baseplate (311) having a top surface (312) and a bottom surface (313), an elongated post (316, 316') having an upper end and lower end, with said upper end thereof coupled to said baseplate (311) so it depends from said bottom surface (313) thereof, and an at least partially threaded blind bore (317) extending from said top surface (312) of said baseplate (311) into said post (316), and having an open top end in said top surface (312) of said baseplate (311) and a closed bottom end in said post (316), with said bottom surface (313) of said anchor baseplate (311) being configured to allow at least a portion of the support structure (50) to abut and lie generally flush thereagainst except for the area of said bottom surface (313) which is covered by post (316);
wherein said post (316, 316') comprises an at least partially threaded screw (316) or an at least partially threaded bolt (316');
**characterised in that**
said assembly (310, 310') additionally includes an elongated, cylindrical, tubular neck portion (350) having a throughbore (326) with an open top end and open bottom end, and wherein said bottom open end thereof is affixed to said top surface (312) of said baseplate (311) with its throughbore (326) in axial alignment and registry with said blind bore (317) of said baseplate (311).

2. The assembly (310, 310') according to Claim 1, wherein said anchor baseplate (311) comprises a flange (311), and wherein optionally said flange (311) is a generally circular, planar flange.

3. The assembly (310, 310') according to Claim 1, wherein said throughbore (326) of said neck portion (350) is at least partially threaded.

4. The assembly (310, 310') according to Claim 1, wherein said blind bore (317) has a longitudinally-extended axis and said assembly additionally includes means for rotating (324) said anchor (310, 310') about said axis of said blind bore (317).

5. The assembly (310, 310') according to Claim 4, wherein said means for rotating (324) comprises a port (324) formed adjacent and within said open top end of said elongated neck portion (350) which is configured and dimensioned to accommodate a tool for rotating said anchor (310, 310') into a support structure (50).

6. The assembly (310, 310') according to Claim 1, additionally including means for fastening (85) an object to said anchor baseplate (311) via said blind bore (317), and wherein optionally said means for fastening (85) is a threaded bolt (85).

7. The assembly (310') according to Claim 1, additionally including means for fastening (41) said anchor baseplate (311) to the support structure (50) with said bottom surface (313) thereof lying generally flush against at least a portion of the support structure (50) except for the area of said bottom surface (313) covered by said post (316'), wherein said post (316') comprises an at least partially threaded bolt (316') and optionally said means for fastening (41) comprises a nut (41).

## Patentansprüche

1. Kombination aus Anker- und Befestigungsanordnung (310, 310') zum Verankern eines Objekts an einer Stützstruktur (50), umfassend:
eine Ankerbasisplatte (311) mit einer oberen Oberfläche (312) und einer unteren Oberfläche (313), einem länglichen Pfosten (316, 316') mit einem oberen Ende und einem unteren Ende, wobei das obere Ende davon an die Basisplatte (311) gekoppelt ist, sodass es von der unteren Oberfläche (313) davon abhängt, und einer zumindest teilweise mit einem Gewinde versehenen Sackbohrung (317), die sich von der oberen Oberfläche (312) der Basisplatte (311) in den Pfosten (316) erstreckt und ein offenes oberes Ende in der oberen Oberfläche (312) der Basisplatte (311) und ein geschlossenes unteres Ende in dem Pfosten (316) aufweist, wobei die untere Oberfläche (313) der Ankerbasisplatte (311) dazu konfiguriert ist, zu ermöglichen, dass zumindest ein Abschnitt der Stützstruktur (50) daran anliegt und im Allgemeinen bündig daran liegt, mit Ausnahme des Bereichs der unteren Oberfläche (313), der durch den Pfosten (316) bedeckt ist;
wobei der Pfosten (316, 316') eine zumindest teilweise mit einem Gewinde versehene Schraube (316) oder einen zumindest teilweise mit einem Gewinde versehenen Bolzen (316') umfasst;
**dadurch gekennzeichnet, dass**
die Anordnung (310, 310') zusätzlich einen länglichen, zylindrischen, rohrförmigen Halsabschnitt (350) beinhaltet, der eine Durchgangsbohrung (326) mit einem offenen oberen Ende und einem offenen unteren Ende aufweist, und wobei das untere offene Ende davon an der oberen Oberfläche (312) der Basisplatte (311) befestigt ist, mit seiner Durchgangsbohrung (326) in axialer Ausrichtung und Registrierung mit der Sackbohrung (317) der Basisplatte (311).

2. Anordnung (310, 310') nach Anspruch 1, wobei die Ankerbasisplatte (311) einen Flansch (311) umfasst und wobei optional der Flansch (311) ein im Allgemeinen kreisförmiger, ebener Flansch ist.

3. Anordnung (310, 310') nach Anspruch 1, wobei die Durchgangsbohrung (326) des Halsabschnittes (350) zumindest teilweise mit einem Gewinde versehen ist.

4. Anordnung (310, 310') nach Anspruch 1, wobei die Sackbohrung (317) eine sich längs erstreckende Achse aufweist und die Anordnung zusätzlich Mittel zum Drehen (324) des Ankers (310, 310') um die Achse der Sackbohrung (317) beinhaltet.

5. Anordnung (310, 310') nach Anspruch 4, wobei das Mittel zum Drehen (324) eine Öffnung (324) umfasst, die benachbart zu dem und innerhalb des offenen oberen Endes des länglichen Halsabschnittes (350) gebildet ist, die dazu konfiguriert und dimensioniert ist, ein Werkzeug zum Drehen des Ankers (310, 310') in eine Stützstruktur (50) aufzunehmen.

6. Anordnung (310, 310') nach Anspruch 1, zusätzlich beinhaltend Mittel zum Befestigen (85) eines Objekts an der Ankerbasisplatte (311) über die Sackbohrung (317), und wobei optional das Mittel zum Befestigen (85) ein Gewindebolzen (85) ist.

7. Anordnung (310') nach Anspruch 1, zusätzlich beinhaltend Mittel zum Befestigen (41) der Ankerbasisplatte (311) an der Stützstruktur (50), wobei die untere Oberfläche (313) davon im Allgemeinen bündig an zumindest einem Abschnitt der Stützstruktur (50) liegt, mit Ausnahme des Bereichs der unteren Oberfläche (313), der durch den Pfosten (316') bedeckt ist, wobei der Pfosten (316') einen zumindest teilweise mit einem Gewinde versehenen Bolzen (316') umfasst und optional das Mittel zum Befestigen (41) eine Mutter (41) umfasst.

## Revendications

1. Ensemble combiné d'ancrage et de fixation (310, 310') destiné à ancrer un objet à une structure de support (50), comprenant :
une plaque de base d'ancrage (311) comportant une surface supérieure (312) et une surface inférieure (313), un montant allongé (316, 316') comportant une extrémité supérieure et une extrémité inférieure, ladite extrémité supérieure de celui-ci étant couplée à ladite plaque de base (311) afin qu'elle dépende de ladite surface inférieure (313) de celle-ci, et un alésage borgne au moins partiellement fileté (317) s'étendant à partir de ladite surface supérieure (312) de ladite plaque de base (311) dans ledit montant (316), et comportant une extrémité supérieure ouverte dans ladite surface supérieure (312) de ladite plaque de base (311) et une extrémité inférieure fermée dans ledit montant (316), ladite surface inférieure (313) de ladite plaque de base d'ancrage (311) étant conçue pour permettre à au moins une partie de la structure de support (50) de venir en butée et de reposer globalement à fleur contre celle-ci, à l'exception de la zone de ladite surface inférieure (313) qui est couverte par le montant (316) ;
ledit poteau (316, 316') comprenant une vis au moins partiellement filetée (316) ou un boulon au moins partiellement fileté (316') ;
**caractérisé en ce que**
ledit ensemble (310, 310') comprend également une partie de col tubulaire cylindrique allongée (350) comportant un alésage traversant (326) doté d'une extrémité supérieure ouverte et d'une extrémité inférieure ouverte, et ladite extrémité inférieure ouverte de celui-ci étant fixée à ladite surface supérieure (312) de ladite plaque de base (311), son alésage traversant (326) étant en alignement axial et coïncidant avec ledit alésage borgne (317) de ladite plaque de base (311).

2. Ensemble (310, 310') selon la revendication 1, ladite plaque de base d'ancrage (311) comprenant une bride (311), et éventuellement ladite bride (311) étant une bride globalement circulaire et plane.

3. Ensemble (310, 310') selon la revendication 1, ledit alésage traversant (326) de ladite partie de col (350) étant au moins partiellement fileté.

4. Ensemble (310, 310') selon la revendication 1, ledit alésage borgne (317) possédant un axe longitudinal et ledit ensemble comprenant également un moyen de rotation (324) dudit ancrage (310, 310') autour dudit axe dudit alésage borgne (317).

5. Ensemble (310, 310') selon la revendication 4, ledit moyen de rotation (324) comprenant un orifice (324) formé adjacent à, et à l'intérieur de, ladite extrémité supérieure ouverte de ladite partie de col allongée (350) qui est conçue et dimensionnée pour recevoir un outil destiné à faire tourner ledit ancrage (310, 310') dans une structure de support (50).

6. Ensemble (310, 310') selon la revendication 1, comprenant également des moyens de fixation (85) d'un objet à ladite plaque de base d'ancrage (311) par l'intermédiaire dudit alésage borgne (317), et éventuellement ledit moyen de fixation (85) étant un boulon fileté (85).

7. Ensemble (310') selon la revendication 1, comprenant également un moyen de fixation (41) de ladite plaque de base d'ancrage (311) à la structure de support (50), ladite surface inférieure (313) de celle-ci étant globalement à fleur d'au moins une partie de la structure de support (50), à l'exception de la zone de ladite surface inférieure (313) couverte par ledit
montant (316'), ledit montant (316') comprenant un boulon au moins partiellement fileté (316') et éventuellement ledit moyen de fixation (41) comprenant un écrou (41).
